# EUROPEAN PATENT SPECIFICATION

(11) **EP 1 146 477 B1**
(45) Date of publication and mention of the grant of the patent: **03.06.2009**
(21) Application number: 00107790.8
(22) Date of filing: 11.04.2000
(51) Int. Cl.: G06K 19/16, G06K 7/10

(54) **Method and apparatus for reading and verifying holograms**
Verfahren und Vorrichtung zum Lesen und Überprüfen von Hologrammen
Méthode et dispositif pour lire et vérifier des hologrammes

(43) Date of publication of application: 17.10.2001
(73) Proprietor: McGrew, Stephen P., Spokane, Washington 99224 (US)
(72) Inventor: McGrew, Stephen P., Spokane, Washington 99224 (US)
(74) Representative: Frischknecht Heller, Steffen

(56) References cited:
- EP-A- 0 549 990
- EP-A- 0 878 780
- US-A- 4 543 660
- US-A- 4 641 017
- PATENT ABSTRACTS OF JAPAN vol. 1996, no. 03, 29 March 1996 (1996-03-29) & JP 07 302338 A (NIPPON STEEL CORP), 14 November 1995 (1995-11-14)

## Description

### TECHNICAL FIELD

This invention relates to holography, and, more particularly, to a hologram reader/verifier.

### BACKGROUND OF THE INVENTION

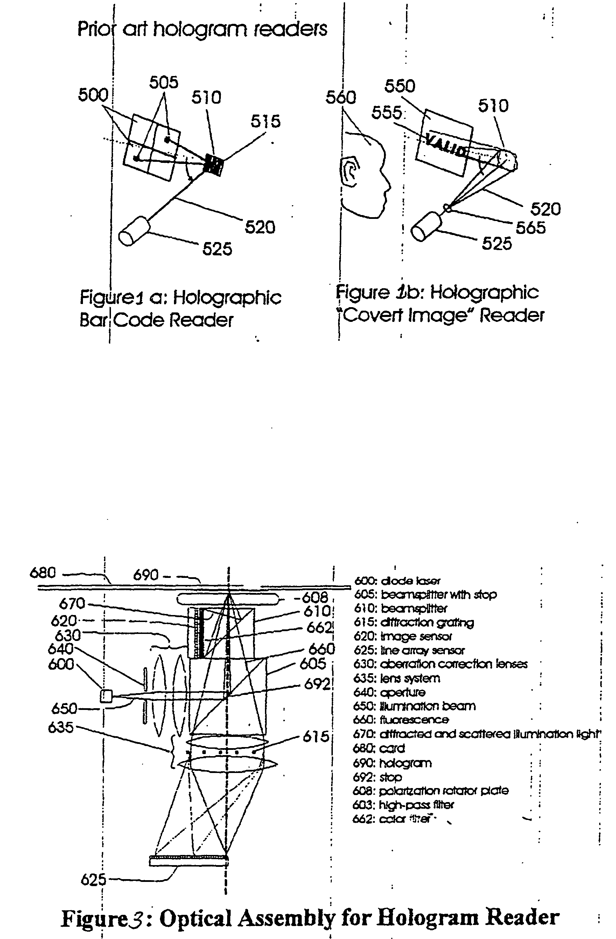

Prior art hologram readers have depended on the use of holograms having a special format or special characteristics. Examples of prior art hologram readers are illustrated in Figures 1a and 1b. In the hologram reader of Figure 1a, a holographic bar code is illuminated by a laser beam 520 that is generated by a laser 525. A pattern of spots 505 is then reconstructed onto a set of photodetectors 500 positioned specifically to detect spots at particular positions.

In the hologram reader of Figure 1b, a hologram 510 containing a non-focused image recording is illuminated by a laser beam 520 that is generated by a laser 525. The laser beam 520 is incident at its reference (or conjugate reference) angle to reconstruct an image 555 onto a ground glass screen 550, where it can be seen by a human observer 560.

Another type of prior art hologram reader (not shown) does not actually read a hologram but instead compares a wavefront recorded in a hologram to a reference wavefront. Yet another type of prior art hologram reader (not shown) simply compares a single 2-D view of the hologram to a stored 2-D reference image.
U.S. Patent No. 4,641,017 to Lopata, entitled Fraud Resistant Credit Card System
U.S. Patent No. 5,331,443 to Stanisci, entitled Laser Engraved Verification Hologram And Associated Methods
U.S. Patent No. 4,761,543 to Hayden et al., entitled, Holographic Security Devices And Systems
U.S. Patent No. 4,108,367 to Hannan, entitled Token And Reader For Vending Machines
U.S. Patent No. 5,712,731 to Drinkwater et al., entitled Security Device For Security Documents Such As Bank Notes And Credit Cards
U.S. Patent No. 5,306,899 to Marom, et al., entitled Authentication System For An Item Having A Holographic Display Using A Holographic Record
U.S. Patent No. 4,131,337 to Moraw, et al., entitled Comparison Reader For Holographic Identification Cards
U.S. Patent No. 3,905,019 to Aoki, et al., entitled Pattern Recognizing Optical Apparatus
U.S. Patent No. 5,666,417 to Liang, et al., entitled Fluorescence Authentication Reader With Coaxial Optics
U.S. Patent No. 5,465,243 to Boardman, et al., entitled Optical Recorder And Reader Of Data On Light Sensitive Media
U.S. Patent No. RE 035,117 to Rando, et al., entitled Scanner With Coupon Validation

The prior art hologram readers described above and in the above-listed patents are capable of reading holograms only if the holograms are specially adapted for the reader. There is therefore a need for a hologram reader that is capable of reading all kinds of holograms without the need for the holograms to be specially adapted for the reader and is capable of reading variable information from holograms.

From Document US 4,641,017 a security system has come to be known. A reflection hologram is laminated or otherwise incorporated into the face of a magnetic-stripe credit card or other similar document. This is done to guard against counterfeiting of the document by transferring of information from the magnetic stripe or similar indicia that is not readily detectable by an operator or user of the card or document. The card is verified by inserting it into a reading device which, while reading the information on the magnetic stripe or other indicia, also illuminates the hologram, producing holographic images or spots at one or more predetermined unique angles, so that the spots can be detected by light sensing devices. Absence of a reflection at the proper angle would immediately indicate, through sensing circuitry, that the card is of questionable validity. To render the system still more secure, the hologram can produce multiple reflective images to be detected at several predetermined positions either from a single point or from multiple points.

In particular, Document US 4,641,017 discloses illuminating a hologram at a single location to cause a holographic image or light spots to be diffracted from the hologram. Sensors located at specific positions determine if the holographic image or light spots are diffracted from the hologram at a predetermined angles.

From Document EP 0,878,780 A2 a biometric verification system has come to be known. The system scans a biometric feature of the user such as the iris of one of his eyes and produces a diffraction pattern of that feature. The diffraction pattern is compared against a reference matched spatial filter in a Van der Lugt optical correlator. If the diffraction pattern and the matched spatial filter match then a correlation dot is produced.

From Document US 4,543,660 a pattern features extracting apparatus and method has come to be known. A plurality of different mask pattern data which are indicated by values obtained from Hermite's polynomials of different degrees weighted by a Gaussian function are stored in mask memories, respectively. Each mask pattern data stored in each of the mask memories is convolved by a sum-of-product circuit together with unknown input pattern data. A plurality of extracted pattern feature data are stored in pattern feature memories.

### BRIEF DESCRIPTION OF THE DRAWINGS

Figure 1a is a schematic drawing showing a prior art hologram reader.
Figure 1b is a schematic drawing showing another prior art hologram reader.
Figure 2a is a schematic drawing of a diffraction pattern typical of a rainbow hologram illuminated at a point using a perpendicular beam.
Figure 2b is a schematic drawing of a diffraction pattern typical of a complex hologram containing both diffraction grating components and rainbow hologram components.
Figure 3 is a schematic drawing of one embodiment of a hologram reader in accordance with the present invention.
Figure 4 is a schematic illustration of a typical fluorescent quantum dot including a core and a cap of organic molecules.
Figure 5 is a schematic drawing of two representative labels containing a hologram, a fluorescent material, and encrypted data in the form of a character string printed directly onto the labels.
Figure 6 is a schematic illustration of a credit card verifier, including the hologram reader of Figure 3, a magnetic stripe reader, and an electronics subsystem.
Figure 7 is a schematic drawing of the type of pattern formed when half of the diffraction pattern from a single point complex hologram is recorded in an image, half of the diffraction pattern from the next single point along a line in the hologram is recorded slightly offset from the first on the same medium, and so on for a series of points along a line across the hologram.
Figure 8 is a flow chart of a system for using hologram readers and label printers to detect and track counterfeit products.

### DETAILED DESCRIPTION OF THE INVENTION

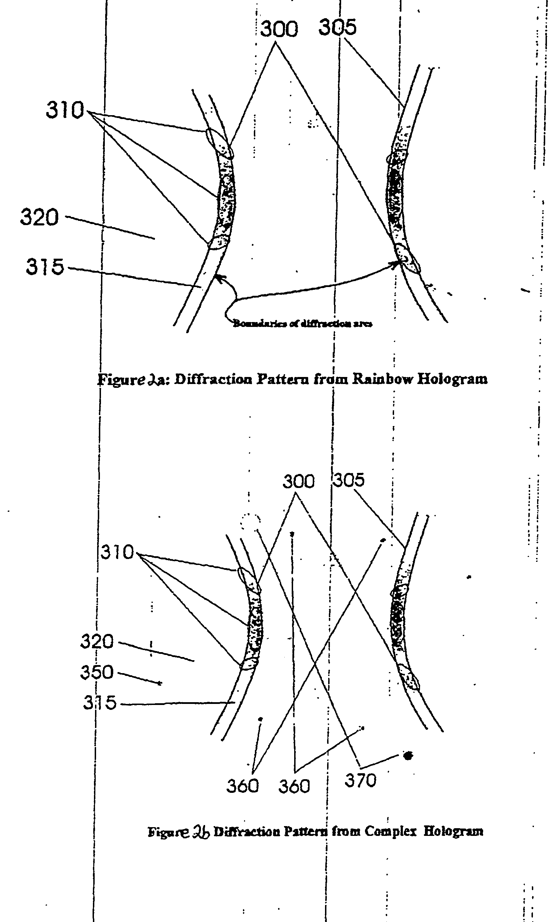

Figure 2a illustrates the diffraction pattern typically obtained from a reflective "rainbow" hologram 300 when an illumination beam (not shown) is incident perpendicular to the surface of the hologram 300. The illumination beam incident at an angle corresponding to a reference beam (not shown) angle used to make the hologram 300 will produce a first-order diffracted beam that forms a straight line segment instead of an arc. Inside a first-order arc as shown in Figure 2a are "blobs" 310 of light that relate to the features of the image that would be visible through an illuminated point on the hologram 300. In order to read a rainbow hologram, it is only necessary to identify and track these blobs 310 as the point of illumination is moved to all salient points on the hologram 300. For example, the salient points on a hologram can be defined as those points on a line through the hologram 300, parallel to an edge of a card or label the hologram is on, and a predetermined distance from the edge.

Figure 2b illustrates a diffraction pattern 320 obtained from a combined rainbow hologram and diffraction grating image. Small spots 350, 360, 370 formed on the pattern correspond to regions containing diffraction gratings, while lines or arcs 315 correspond to regions containing rainbow hologram components or "2D" hologram components. If the lines or arcs 315 contain blobs 310, the corresponding hologram component is usually a 3D hologram. If the lines or arcs 315 contain only a substantially featureless or uniform distribution of light, the corresponding hologram component is a "2D" hologram.

While standard image processing techniques can be used to identify the size, shape and location of each blob 310, it is helpful to take advantage of properties specific to holograms in order to simplify the feature detection and identification task. Unless holograms are blazed, they produce diffraction patterns that are approximately radially symmetric, as are the spots 360 shown in Figure 2b. However, if the holograms are blazed, the positions of the +1 and -1 orders are symmetrical but the brightness of one is substantially higher than that of the other, as are the spots 370 shown in Figure 2b.

For a hologram reader to be able to distinguish between different holograms, certain features of the holograms are important. These features include spot location, blob location, blob asymmetry, blob size, blob shape, blob velocity, blob envelope, and stray light, each of which are discussed below.

The location of a blob can usually be defined as the location of its brightness peak. Alternatively, blob location can be defined as center of mass of the intensity distribution. Radial coordinates are appropriate, since the overall pattern will have a large degree of radial symmetry.

Blob asymmetry can be defined as the ratio of intensities of corresponding blobs in the +1 and -1 orders. Each blob pair will have its own asymmetry.

Blob size can be defined as the maximum width of the region covered by a blob. Coverage in turn can be defined as having an intensity greater than some threshold level determined by the peak intensity of the blob and the background brightness.

In most diffraction patterns from holograms used commercially today, blobs are either point-like or line-like. Line-like blobs occur on the arcs shown in Figure 2, while point-like blobs occur anywhere in the diffraction pattern. The hologram diffraction pattern shown in Figure 2b has both kinds of blobs. Other blob shapes are possible, and the image processing software should have the capability of detecting the presence of unusual shapes.

As a hologram is being read by a point of illumination moving across the hologram, the blobs in the diffraction pattern move and change in a piecewise continuous fashion. Blob velocity is the rate-of-change of the blob's location, asymmetry, size and shape in the diffraction pattern with respect to change of location of the illuminated point on the hologram.

In a rainbow hologram, the arc (as seen in Figures 2a and 2b) is defined by the limits of the blob boundaries as they move in response to changing location of the illuminated point. The blobs never move outside the boundaries of the arc. The arc itself corresponds to the size and shape of an H-1 hologram used to make the rainbow hologram, or of an aperture through which H-1 light was transmitted on its way to forming an H-2 hologram. The position, curvature and orientation of the arc, then, provide information about the physical apparatus used to make the hologram.

In most holograms, there is stray light in the diffraction pattern. This light forms dim symmetric patterns upon illumination with a normal-incidence beam, but it has no apparent connection with the visible image. Ordinarily these stray diffraction components result from scattered light in the hologram recording apparatus in which the scattered light is recorded as a hologram along with the object light. A common technique of holographers is to illuminate a hologram with laser light and look through it to see an image of the apparatus that was used to record the hologram.

All information recorded in a hologram is extractable via the diffraction pattern produced (*e*.*g*., Figures 2a and 2b) by the illumination of each point of the hologram. Ordinarily, holograms used in document security are mass-produced from a single original master hologram, and the diffraction patterns are the same for all of the holograms. However, new low-cost hologram recording materials and inexpensive lasers have been developed that have begun to make it practical to produce large numbers of one-off holograms, each containing unique information. In order to read the information in such holograms, it is either necessary to design the holograms to be easy to read (as in the prior art), or to design a reader, such as a reader according to a preferred embodiment of the present invention, that is capable of reading all diffraction patterns produced by points of the hologram.

Figure 3 illustrates a hologram reader in accordance with one embodiment of the present invention. The hologram reader includes a laser diode 600, focusing optics 630, preferably with aberration correction, a first beamsplitter 610, a color-selective filter 662, an image sensor 620, a time-gated line array sensor 625, spectrum-forming optics 615, 635, and a second beamsplitter 605. The laser diode 600, preferably having the shortest wavelength available, generates a beam 650 that is shaped by the focusing optics 630 to form a converging spherical wave. The converging spherical wave converges to a small spot on a hologram 690, which is hot-stamped onto a credit card 680. A suitable laser diode 600 that may be used as the light source for the hologram reader is a green frequency-doubled laser diode. However, blue laser diodes or UV laser diodes may be preferred as they become commercially available at reasonable cost.

The hologram 690 on the card 680 may be transparent, in which case a relief surface of the hologram 690 is preferably coated with a high-refractive index material (not shown) so that the hologram 690 is significantly bright. Suitable high-refractive index materials include titanium oxide or zinc sulfide. If the hologram 690 is transparent, the surface of the card 680 underneath the hologram 690 may be provided with features detectable through the hologram, such as patterns of fluorescent ink, colored ink, fibers, magnetic inks, or optically variable inks.

In operation, the laser beam 650 diffracts from the hologram 690 to form a pattern on the image sensor 620. The image sensor 620 does not sense the entire image in the hologram. Instead, the image sensor 620 senses the pattern of diffracted light from one illuminated spot on the hologram 690. The color-selective filter 662 ensures that the image sensor 620 receives only light of the same color as the illuminating laser beam 650, and therefore receives predominantly diffracted, scattered and reflected light. If the illuminating laser beam 650 is directed at an appropriate angle to the hologram 690, corresponding to the angle between reference and object beams (not shown) used in manufacturing the hologram 690, only positive diffracted orders will fall onto the image sensor 620 placed directly above the hologram. Alternatively, the illuminating laser beam 650 may be directed perpendicularly to the hologram 690, as indicated in Figure 3, thereby enabling the image sensor 620 to receive both positive and negative diffracted orders while placed directly above the hologram 690.

Illumination of fluorescent inks printed on the substrate of the card 680 induces the emission of fluorescent light. This fluorescent light passes through the spectrum-forming optics 615, 635 to the second beamsplitter 605, which directs the fluorescent light onto the time-gated line array sensor 625. The time-gated line array sensor 625 images the spectrum of the fluorescent light. A stop 692 blocks the direct reflection (zero-order diffracted beam) of the illumination laser beam 650 from striking the line array sensor 625.

Fluorescence from different substances has two primary distinguishing features: emission spectrum and temporal behavior. For example, many organic dyes have a very short fluorescence lifetime so that if they are illuminated with a picosecond pulse of excitation light, they emit a brief pulse of fluorescence shorter than a nanosecond. Other fluorescent substances emit fluorescence for hundreds of nanoseconds following excitation. Many materials are fluorescent to some degree, but most have short fluorescence lifetimes; so it is advantageous to use a fluorescent ink with a long fluorescence lifetime, thereby providing the opportunity to exclude background fluorescence by time-gating methods.

In the embodiment illustrated in Figure 3, the line array sensor 625 is time-gated and the laser diode 600 is pulsed. If the fluorescence lifetime of the fluorophores in the printing on the substrate of the card 680 is longer than typical fluorescence lifetimes of ordinary materials, then by selectively detecting only fluorescent light received more than, say, 100 nanoseconds following the excitation pulse, background fluorescence is effectively excluded.

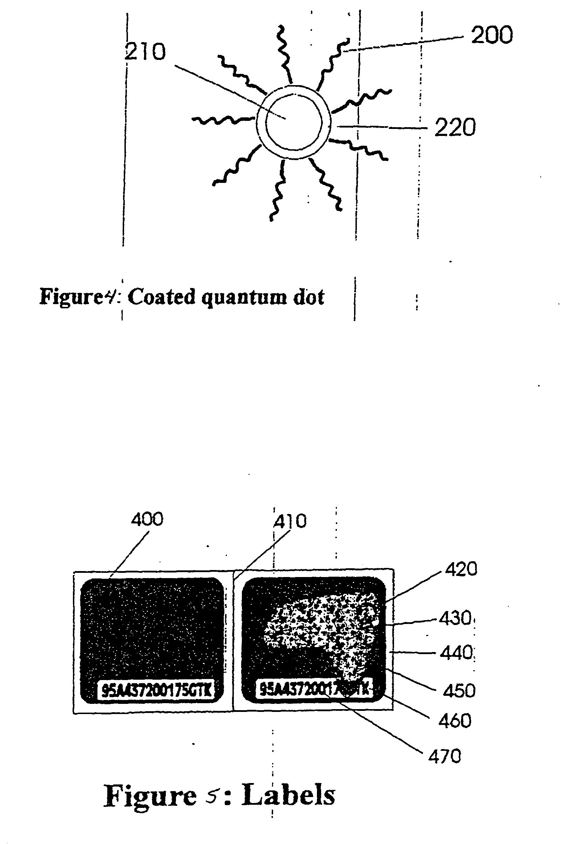

One example of a suitable fluorescent material is formed using quantum dots 210, as illustrated in Figure 4. The quantum dots 210 are preferably composed of CdSe and coated with a cap 220 of ZnSe. Such ZnSe-capped CdSe quantum dots are known to have fluorescence lifetimes on the order of 100 nanoseconds. Alternatively, the line array sensor 625 can simply have a response time on the order of tens or hundreds of nanoseconds, and the laser diode 600 can be modulated at a rate of one to tens of megahertz. The fluorescence lifetime can then be measured as a function of the phase difference between the illumination modulation and the fluorescence signal. In any case, the line array sensor 625 detects the fluorescence spectrum of any ink or other fluorescing substance under the hologram 690 at the illuminated spot.

Examples of labels 400, 410 formed by holograms 450 having an underlying fluorescent material 430 are illustrated in Figure 5. In both cases, the hologram 450 is semi-transparent hot stamping foil applied over a substrate 460, which may be formed by paper. The fluorescent material 430 is preferably printed directly on the substrate 460. The hologram 450 has a void in which encrypted data in the form of a character string 470 is printed directly onto the substrate 460. The labels 400, 410 preferably have an adhesive backing (not shown) and a peel-off protective silicone paper back (not shown).

The fluorescent substance 430 may be a fluorescent ink containing fluorophores. It is advantageous to use a patterned fluorescent substance 430 on the substrate 460 having a distinctive fluorescence spectrum. A suitable fluorescent substance 430 is a fluorescent ink containing fluorophores, such as the ZnS-capped CdSe quantum dots 420 described above. The quantum dots 420 are preferably of specific sizes so that the fluorescence spectra will be relatively narrow. Specific organic dyes such as Rhodamine 6G, which has a distinctive peak fluorescence wavelength, may be used. The fluorescent substance 430 is described in greater detail in co-pending patent application entitled QUANTUM DOT SECURITY DEVICE AND METHOD.

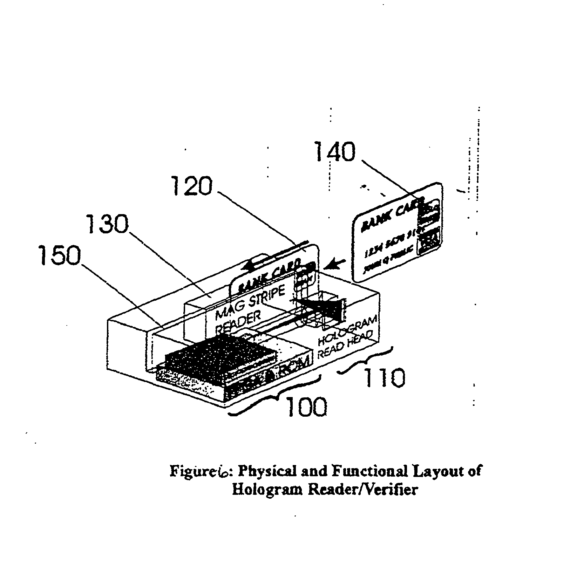

The credit card 120 of Figure 6 is representative of the full class of labels, tags, documents, identification cards, authentication labels, paper currencies, seals, and other items on which a hologram, diffractive image, security label or other security device may be placed. The holograms 690, 450, 140 shown in Figures 3, 5 and 6, respectively, are representative of the full class of diffractive images including dot-matrix holograms, 2D3D holograms, stereograms, kinegrams, kineforms, Bragg holograms, embossed holograms, holograms embossed into colored film, holographic hot stamping foils, pixelgrams, electron-beam diffractive patterns, and binary optical patterns. As used herein, the term "substrate" means any surface or substance on which a hologram is placed or held in close proximity to, including any inks, fibers, embossing, chemical treating, magnetic properties, or other properties or features of the surface or substance.

Returning to Figure 3, the image sensor 620, in addition to sensing the pattern of light diffracted by the hologram 690 or 450, also detects light scattered from the substrate of the card 680 or 460 due to fibers, texture, or other properties of the substrate material. Light diffracted by a hologram 690, 450 typically produces a much higher contrast pattern than light scattered uniformly by, for example, a white substrate. Holograms, however, typically produce distinctive diffraction patterns that can be subtracted from the sensed pattern. Changes in the average intensity of light received by the image sensor 620, with the diffracted patterns subtracted out, correspond to changes in the amount of diffusely scattered light from the substrate due to printed patterns or other light-affecting patterns on the substrate. Thus, the hologram reader shown in Figure 3 can read holograms, fluorescent patterns, and light scattering or light absorbing patterns, as long as such patterns are evident in light of the wavelength range emitted by the laser diode 600. Although a laser diode 600 is used as the illumination source for the hologram reader of Figure 3, it will be understood that other light sources may be used, such as any well-collimated (spatially coherent) white light source. In such cases, the diffractive patterns, spots and scattered light will usually be discernible by the image sensor 620.

Components, modules and combinations of components in the optical and electronic subsystems of the reader may be substituted for other equivalent components, modules, and combinations of components may be substituted, with the objectives of sensing the diffracted light pattern from the illuminated spot on the hologram and/or the amount of scattered light from each point on or under the hologram, and/or the amount, timing or spectrum of fluorescence emitted from the hologram or its substrate.

Wavelength-selective filters (not shown) may be inserted in the optical path from the hologram 690 to the image sensor 620 and/or in the optical path from the hologram 690 to the time-gated line array sensor 625. The wavelength-selective filters limit detected light to a desired range of wavelengths. For example, since scattered light and diffracted light are of the same wavelength as the laser diode 650, a filter that is transmissive to the wavelength of the laser diode 650 but reflective or absorptive to other wavelengths may be advantageously inserted between the sensor 620 and beamsplitter 610. Similarly, a filter that is reflective or absorptive to light at the wavelength of the laser diode 650 and transmissive to light in the fluorescence bandwidth of the fluorophores may be inserted between the sensor 625 and beamsplitter 605.

Alternatively, the beamsplitter 610 may be a polarizing beamsplitter and a quarter-wave plate 608 may be inserted between the beamsplitter 610 and the hologram 690 such that laser light is transmitted nearly 100% at the beamsplitter on its way to the hologram 690, and is also nearly 100% reflected on its way to the image sensor 620. In this case, the beamsplitter 610 may be a wavelength-selective polarizing beamsplitter so that most of the fluorescence light is directed to the line array detector 625, as indicated in Figure 6.

The hologram reader shown in Figure 3 may be combined with readers using other technologies. For example, a reader/verifier using multiple technologies is shown in Figure 6 for use in detecting counterfeit credit cards. In addition to including an optical read head 110, which may be the hologram reader of Figure 3, the reader/verifier of Figure 6 includes a conventional magnetic stripe reader 130. The optical read head 110 reads a hologram 140 on a credit card 120, while the magnetic stripe reader 130 reads information recorded on a conventional magnetic stripe (not shown) on the credit card 120 while the credit card 120 slides through a slot 150. The reader/verifier also includes an electronics subsystem 100. The electronics subsystem 100 preferably includes a microprocessor (not shown), a field programmable gate array ("FPGA") (not shown) and a read only memory ("ROM") (not shown), which contains software that is executed by the microprocessor. The electronics subsystem 100 also preferably includes means for communicating with external systems such as a computer (not shown) or telephone network (not shown).

The FPGA in the electronics subsystem 100 is provided to do the image processing. An alternative implementation uses an Artificial Neural Network (ANN). In fact, any image processing means capable of recognizing salient features of a diffraction pattern may be used to distinguish between the diffraction patterns of different holograms and of counterfeit and valid holograms or other diffractive anti-counterfeiting devices known variously as DOVIDs, holograms, stereograms, kineforms, dot-matrix holograms, kinegrams, pixelgrams and so on.

A suitable FPGA that can be used in the electronics subsystem is a model 6216 FPGA available from Xilinx. The FPGA can be programmed to perform almost any desired signal-processing function. For example, the FPGA may be programmed by downloading a configuration file to the FPGA. The configuration file determines the pattern of interconnections among the logic gates on the FPGA. In the case of the Xilinx 6216 FPGA, the FPGA has 128 pins available for input and output, and there are approximately 35,000 logic gates on the FPGA. All of the logic gates can be operated in parallel, synchronously or asynchronously. There are also design tools commercially available for designing the configuration file for the FPGA. A preferred approach in some applications, however, employs evolutionary computation methods to design configuration files. This evolutionary computing approach is within the skills of an individual or team of individuals having ordinary skill in genetic algorithms or genetic programming, FPGA structure and design methods, chip-level electronics and the mathematics of image processing. Alternatively, evolutionary design tools for FPGA configuration files are commercially available from New Light Industries, Ltd., of Spokane, WA 99224 under the trade name of "FPGA-Generator"^{tm}.

In the preferred embodiment of the invention, an evolutionary technique is used to design FPGA-based algorithms in the electronics subsystem for feature recognition and extraction. In one version, the following steps are carried out:
1. A target function is defined by visually identifying features in a set of diffraction patterns to produce feature-tagged images.
2. A trial function is defined by specifying a matrix to serve as a convolution template.
3. A population of templates is generated randomly, and each member of the population is used to produce a set of convolved images of a training set of images
4. The convolved images produced by each member of the population are compared to the target set of feature-tagged images to produce a fitness value for the member, such that the fitness represents the degree of correspondence between the produced convolved images and the feature-tagged images.
5. Using standard genetic algorithm techniques, the templates are recombined and/or mutated depending on their fitness to evolve an optimum template.

The precise choice of recombination and mutation operators, and the other GA parameters such as recombination rate, mutation rate and size, population size, elitism, etc., can affect the speed at which evolution proceeds. At this time, there is not a known best choice of operators and GA parameters for all classes of problems.

In operation, the reader/verifier of Figure 6 detects counterfeit credit cards 120 by reading the hologram 140. More specifically, a series of points across the hologram 140 are illuminated as explained above with reference to Figure 3 as the credit card 120 is drawn through the slot 150. Diffraction patterns from the points are formed on the image sensor 620 where they are converted to video signals. The video signals are analyzed by the electronics subsystem 100 to extract a feature vector corresponding to the values of the significant features of the diffraction patterns in the hologram 140. The feature vector is then compared to a database of feature vectors from valid and invalid holograms, and the hologram 140 is classified according to the similarity of its feature vector to vectors in the database. Data identifying the feature vectors for a valid hologram may also possibly be stored on the magnetic stripe and read by the magnetic stripe reader 130 for comparison with the feature vectors for the hologram 140.

The electronics subsystem 100 builds a representation of the scattering and fluorescence information extracted from the credit card 120 to determine validity or invalidity of the credit card 120. The optical read head 110 used in the hologram reader of Figure 6 is thus capable of sensing diffractive properties, fluorescence properties, light scattering properties and light absorptive properties at a point on the credit card 120. If the imaging sensor and/or the line array sensor or the associated electronics are appropriately designed, the reader/verifier can also sense differences between those properties from point-to-point.

The way to build a representation of the diffraction information in the hologram 140 is to detect intensity peaks in the diffraction pattern and generate a list of the locations, sharpness and relative brightness of the peaks. When a series of diffraction patterns are observed at a series of regions across the item, it is advantageous to represent the diffractive properties of the entire item either as a list-of-lists or as a compiled, sorted list.

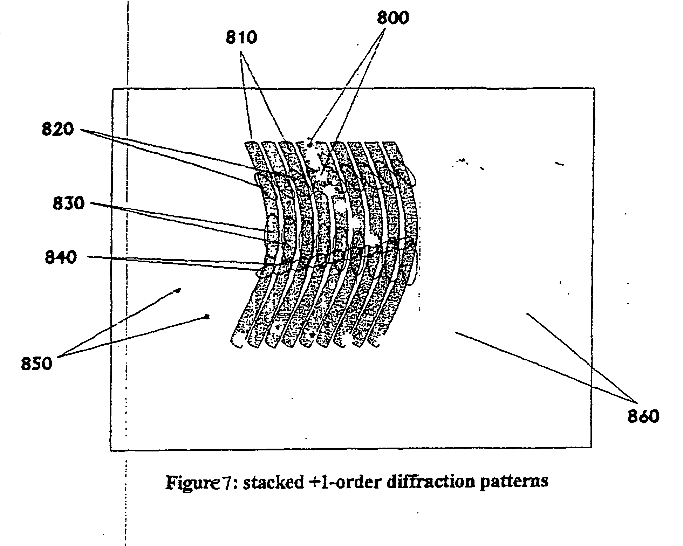

A simple way to represent the diffraction information is to halve the diffraction pattern and save only the position and intensity data obtained from that portion. A representative image of a complete set of diffraction patterns from a line across a hologram is then constructed by stacking the data, as illustrated in Figure 7. A plurality of blobs 820, 830, 840 then trace paths across the resulting composite image, and any spots 800, 850, 860 from diffraction grating components also trace paths across the resulting composite image. This representative image may then be tested by convolving it with a similarly obtained representative image of each of one or more reference images, which may correspond for example to valid and counterfeit holograms. The paths due to blob and spot motion obtained as in Figure 7 are substantially invariant with respect to the particular choice of hologram points that are sampled, as long as the scale is essentially unchanged.

As mentioned above, an advantage of the hologram reader illustrated in Figure 3 is that it can read virtually any type of hologram. Thus a variety of techniques can be used to record holograms that are usable with the hologram reader of Figure 3. Each of these hologram has its own particular set of characteristics. Some of the characteristics or parameters useful for classifying different kinds of holograms and diffractive images include:
1. recording medium;
2. reference and object beam angles and positions;
3. dot size, shape, spacing, placement, grating angle, and grating period in dot-matrix holograms;
4. rainbow (Benton), classical, 2D3D, stereogram, or dot matrix holograms;
5. transmissive or reflective;
6. reflectivity- enhancing layers;
7. color selectivity of recording medium and Bragg grating structure;
8. color properties of the recording and reconstruction geometry;
9. encoded reference beam or object beam; and
10. features and characteristics of a substrate on which the hologram is laminated or hot-stamped.

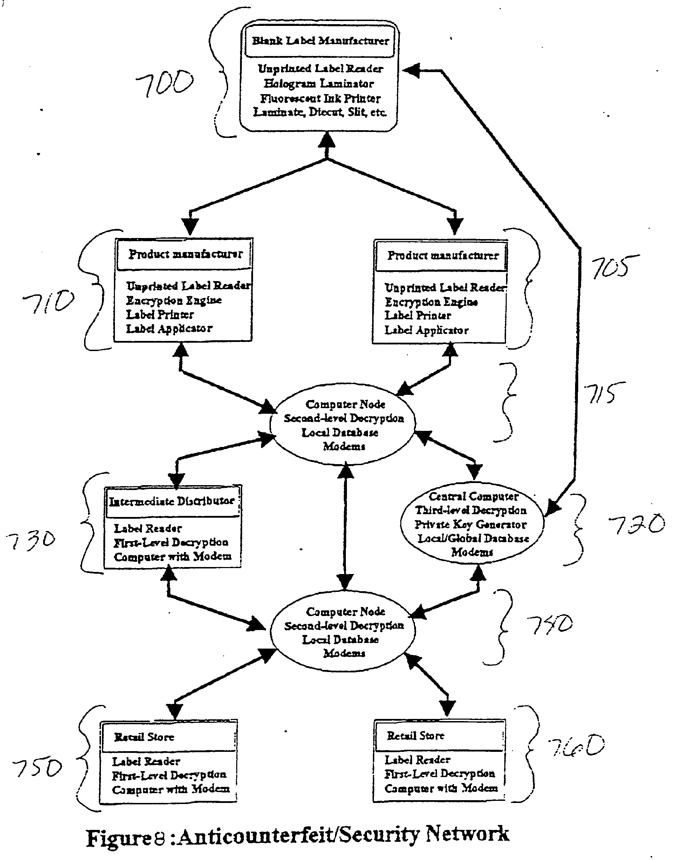

The hologram reader of Figure 3 may be integrated into a comprehensive anticounterfeit/security system, as illustrated in Figure 8. The anticounterfeit/security includes one or more sites 700 for manufacturing anticounterfeit/security labels bearing detectable random data on substrates covered by transparent holograms, one or more manufacturing sites 710, 705 for products, one or more hologram readers at each manufacturing site, label printers at each manufacturing site, one or more intermediate distribution points 730, 720 with hologram readers, one or more distribution endpoints 750, 760 with hologram readers, and a computer network consisting of a hierarchy of nodes 740, 750, 720.

The random data (e.g., in the labels 400, 410 shown in Figure 5, the locations of fluorescent dots 420 under the holograms 450) are read at the label manufacturing sites 700 and stored in a database. Each hologram printer at the manufacturing sites 700 has associated with it an encryption engine. The encryption engine combines a representation of the random data corresponding to the dots 420 on the labels 400, 410 with private key information securely hidden inside the encryption engine and variable information generated inside the encryption engine to produce an encrypted character string 470 (Figure 5), which is then printed on the labels 400, 410 by the label printer.

The printed labels are placed on products, which are distributed via intermediate and final distribution points. The labels may be read at the distribution points by hologram readers that are associated with decryption engines. The hologram readers read the random data from the substrates underneath the holograms and use the random data as a public key to decrypt the character string printed on the label, without determining the private key securely hidden in the encryption engine. If a label has been counterfeited or illegitimately produced, either the character string will not be decryptable or the random data will not be contained in the label manufacturer's database.

The term, "character string" is used here inclusively of any encoded information, including bar codes, optically readable alphanumeric characters, encoded magnetic stripes, magnetically readable alphanumeric characters, optically readable bit strings, icons, and the like.

Information relating to the particular labels passing through each distribution point and their validity or invalidity is collected by a network of computer nodes and analyzed at one or more sites. A central computer node may download information to the distribution sites to alert them to particular counterfeiting threats or to upgrade their decryption engines and/or download upgrades to encryption engines to the label printers.

The anticounterfeit/security system illustrated in Figure 8 is capable of detecting counterfeit products at any point in the manufacturing and distribution flow, and can also collect and analyze product flow. If counterfeits are detected, the temporal and geographic pattern of their appearance can be used to help track down their sources and distribution channels. The system provides the ability to detect factory overruns of labels or products, monitor the number of labels produced, and so on.

It is to be understood that even though various embodiments and advantages of the present invention have been set forth in the foregoing description, the above disclosure is illustrative only, and changes may be made in detail, and yet remain within the scope of the claims. For example, many of the components described above may be implemented using either digital or analog circuitry, or a combination of both, and also, where appropriate, may be realized through software executing on suitable processing circuitry. Therefore, the present invention is to be limited only by the appended claims.

## Claims

1. Apparatus for extracting information from diffractive objects comprising:
a) means (600) for illuminating a diffractive object (690) with spatially coherent radiation;
b) means (625) for detecting at least a portion of the pattern of radiation diffracted by the object (690);
c) means for comparing the detected portion of the pattern with a template pattern to produce a transformed version of the pattern;
***characterised by***
d) means for identifying and locating peak values in the transformed version;
e) means for representing as a vector the locations of the peak values in the transformed version of the pattern, the vector being an ordered list of values; and
f) means for comparing the vector to a set of reference vectors in a database to classify the vector and thereby to classify the diffraction pattern from the diffractive object.

2. Apparatus according to claim 1,
a) wherein the spatially coherent radiation comprises radiation having a predetermined temporal modulation including a plurality of modulation frequencies, and
b) wherein the means for detecting comprises a time-gated photosensor (625).

3. Apparatus according to claim 1, wherein the means (625) for detecting is structured to detect differences between the spectral properties of the radiation from the means (600) for illuminating and spectral properties of radiation received from the diffractive object (690).

4. Apparatus according to claim 1, wherein the diffractive object (690) comprises a diffractive surface relief image.

5. Apparatus according to claim 1, wherein the diffractive object (690) comprises a substrate at least partially covered with a pattern of light-emissive particles.

6. Apparatus according to claim 1, wherein the diffractive object (690) comprises a surface relief hologram and a proximate layer containing light-emissive particles.

7. Apparatus according to claim 1, wherein the means (625) for detecting is structured to detect the spatial distribution of radiation diffracted and scattered from the diffractive object (690).

8. Apparatus according to claim 1, further comprising:
a) a photodetector array (625) having a plurality of elements;
b) spectrally dispersive optics to disperse radiation emitted or light diffracted and scattered light from the diffractive object (690); and
c) an electronic device coupled to the photodetector array and structured to process a signal received from the photodetector array to interpret the distribution of radiation on the elements of the photodetector array.

9. Method of extracting information from diffractive objects (690), comprising:
a) illuminating a diffractive object (690) with spatially coherent radiation;
b) detecting at least a portion of the pattern of radiation diffracted by the object (690);
c) comparing the detected portion of the pattern with a template pattern to produce a transformed version of the pattern;
**characterised by**
d) identifying and locating peak values in the transformed version;
e) representing as a vector the locations of the peak values in a transformed version of the pattern, the vector being an ordered list of values; and
f) comparing the vector to a set of reference vectors to classify the vector and thereby to classify the diffraction pattern from the diffractive object.

10. Method according to claim 9, further comprising:
a) storing a record of verifying information corresponding to the spatial distribution of emissive properties or diffracting and scattering properties of radiation from the diffractive object (690); and
b) comparing the stored record of verifying information with the information from the diffractive device (690).

11. Method according to claim 9, wherein the acts of detecting at least a portion of the pattern of radiation diffracted by the object (690) comprises detecting and analysing radiation received from the diffractive object (690).

12. Method according to claim 9, wherein the spatially coherent radiation comprises radiation having a predetermined temporal modulation including a plurality of modulation frequencies.

13. Method according to claim 9, wherein the act of detecting at least a portion of the pattern of radiation diffracted by the object (690) comprises detecting differences between the spectral properties of the radiation from the means (600) for illuminating and spectral properties of radiation received from the diffractive object (690).

14. Method according to claim 9, wherein the diffractive object (690) comprises a diffractive surface relief image.

15. Method according to claim 9, wherein the diffractive object (690) comprises a surface relief hologram and a proximate layer at least partially covered by light-emissive particles.

16. Method according to claim 9, wherein the diffractive object (690) comprises a surface relief hologram and a proximate layer containing light emissive particles.

17. Method according to claim 9, wherein the act of detecting at least a portion of the pattern of radiation diffracted by the object (690) comprises detecting the spatial distribution of radiation diffracted and scattered from the diffractive object (690).

## Patentansprüche

1. Vorrichtung zum Extrahieren von Informationen aus Beugungsobjekten, aufweisend:
a) eine Einrichtung (600) zum Beleuchten eines Beugungsobjektes (690) mit räumlich kohärenter Strahlung;
b) eine Einrichtung (625) zum Detektieren von mindestens einem Teil des durch das Objekt (690) gebeugten Strahlungsmusters;
c) eine Einrichtung zum Vergleichen des detektierten Teils des Musters mit einer Mustervorlage zum Erzeugen einer transformierten Version des Musters;
**gekennzeichnet durch**
d) eine Einrichtung zum Identifizieren und Lokalisieren von Peakwerten in der transformierten Version;
e) eine Einrichtung zum Repräsentieren der Orte der Peakwerte in der transformierten Version des Musters als ein Vektor, wobei der Vektor eine geordnete Liste von Werten ist; und
f) eine Einrichtung zum Vergleichen des Vektors mit einer Menge von Referenzvektoren in einer Datenbasis zum Klassifizieren des Vektors und um damit das Beugungsmuster des Beugungsobjektes zu klassifizieren.

2. Vorrichtung nach Anspruch 1,
a) wobei die räumlich kohärente Strahlung eine vorbestimmte zeitliche Modulation mit einer Mehrzahl von Modulationsfrequenzen aufweisende Strahlung umfaßt, und
b) wobei die Einrichtung zum Detektieren einen mit einem Zeitgatter versehenen Photosensor (625) beinhaltet.

3. Vorrichtung nach Anspruch 1, wobei die Detektionseinrichtung (625) zum Detektieren von Differenzen zwischen den spektralen Eigenschaften der Strahlung aus der Beleuchtungseinrichtung (600) und den spektralen Eigenschaften der von dem Beugungsobjekt (690) empfangenen Strahlung strukturiert ist.

4. Vorrichtung nach Anspruch 1, wobei das Beugungsobjekt (690) ein beugendes Oberflächenreliefbild beinhaltet.

5. Vorrichtung nach Anspruch 1, wobei das Beugungsobjekt (690) ein Substrat beinhaltet, das mindestens teilweise mit einem Muster aus lichtemittierenden Partikeln bedeckt ist.

6. Vorrichtung nach Anspruch 1, wobei das Beugungsobjekt (690) ein Oberflächenreliefhologramm sowie eine benachbarte, lichtemittierende Partikel enthaltene Schicht beinhaltet.

7. Vorrichtung nach Anspruch 1, wobei die Detektionseinrichtung (625) zum Detektieren der räumlichen Verteilung von durch das Beugungsobjekt (690) gebeugtem und gestreutem Licht strukturiert ist.

8. Vorrichtung nach Anspruch 1, ferner aufweisend:
a) eine Photodetektoranordnung (625) mit einer Mehrzahl von Elementen;
b) eine spektral dispersive Optik zum Auffächern von emittierter Strahlung oder von Licht, das durch das Beugungsobjekt (690) gebeugt und gestreut wird; und
c) eine mit der Photodetektoranordnung gekoppelte und zum Verarbeiten eines von der Photodetektoranordnung empfangenen Signals strukturierte elektronische Vorrichtung zum Interpretieren der Strahlungsverteilung auf den Elementen der Photodetektoranordnung.

9. Verfahren zum Extrahieren von Informationen aus Beugungsobjekten (690), aufweisend:
a) Beleuchten eines Beugungsobjektes (690) mit räumlich kohärenter Strahlung;
b) Detektieren mindestens eines Teiles des Strahlungsmusters, das von dem Objekt (690) gebeugt wird;
c) Vergleichen des detektierten Teiles des Musters mit einer Mustervorlage, um eine transformierte Version des Musters herzustellen;
**gekennzeichnet durch**
d) Identifizieren und Lokalisieren von Peakwerten in der transformierten Version;
e) Darstellen der Orte der Peakwerte in einer transformierten Version des Musters als ein Vektor, wobei der Vektor eine geordnete Liste von Werten ist; und
f) Vergleichen des Vektors mit einer Menge von Bezugsvektoren zum Klassifizieren des Vektors und um **dadurch** das Beugungsmuster des Beugungsobjektes zu klassifizieren.

10. Verfahren nach Anspruch 9, ferner aufweisend:
a) Speichern eines Satzes von Verifikationsinformationen entsprechend der räumlichen Verteilung von Emissionseigenschaften oder entsprechend Diffraktions- und Streueigenschaften von Strahlung von dem Beugungsobjekt (690); und
b) Vergleichen des gespeicherten Satzes von Verifikationsinformationen mit den Informationen aus der Beugungsvorrichtung (690).

11. Verfahren nach Anspruch 9, wobei die Akte des Detektierens von mindesten einem Teil des Strahlungsmusters, das durch das Objekt (690) gebeugt wird, das Detektieren und Analysieren von durch das Beugungsobjekt (690) empfangener Strahlung beinhalten.

12. Verfahren nach Anspruch 9, wobei die räumlich kohärente Strahlung eine eine vorbestimmte zeitliche Modulation mit einer Mehrzahl von Modulationsfrequenzen aufweisende Strahlung beinhaltet.

13. Verfahren nach Anspruch 9, wobei der Akt des Detektierens von mindestens einem Teil des Musters von durch das Objekt (690) gebeugter Strahlung das Detektieren von Differenzen zwischen den spektralen Eigenschaften der Strahlung von der Beleuchtungseinrichtung (600) und spektralen Eigenschaften der von dem Beugungsobjekt (690) empfangenen Strahlung beinhaltet.

14. Verfahren nach Anspruch 9, wobei das Beugungsobjekt (690) ein beugendes Oberflächenreliefbild beinhaltet.

15. Verfahren nach Anspruch 9, wobei das Beugungsobjekt (690) ein Oberflächenreliefhologramm und eine benachbarte, mindestens teilweise mit lichtaussendenden Partikeln bedeckte Schicht beinhaltet.

16. Verfahren nach Anspruch 9, wobei das Beugungsobjekt (690) ein Oberflächenreliefhologramm und eine benachbarte, lichtaussendende Partikel beinhaltende Schicht beinhaltet.

17. Verfahren nach Anspruch 9, wobei der Akt des Detektierens mindestens eines Teiles des Musters der durch das Objekt (690) gebeugten Strahlung das Detektieren der räumlichen Verteilung von durch das Beugungsobjekt (690) gebeugter und gestreuter Strahlung beinhaltet.

## Revendications

1. Dispositif pour extraire des informations d'objets de diffraction comprenant :
a) des moyens (600) pour éclairer un objet de diffraction (690) avec un rayonnement spatialement cohérent ;
b) des moyens (625) pour détecter au moins une partie du diagramme de rayonnement diffracté par l'objet (690) ;
c) des moyens pour comparer la partie détectée du diagramme avec un modèle de diagramme pour produire une version transformée du diagramme ;
**caractérisé par**
d) des moyens pour identifier et localiser des valeurs crêtes dans la version transformée ;
e) des moyens pour représenter en tant que vecteur les emplacements des valeurs crêtes dans la version transformée du diagramme, le vecteur étant une liste ordonnée de valeurs ; et
f) des moyens pour comparer le vecteur à un ensemble de vecteurs de référence dans une base de données pour classer le vecteur et pour classer de ce fait le diagramme de diffraction de l'objet de diffraction.

2. Dispositif selon la revendication 1,
a) dans lequel le rayonnement spatialement cohérent comprend un rayonnement ayant une modulation temporelle prédéterminée comprenant une pluralité de fréquences de modulation, et
b) dans lequel les moyens pour détecter comprennent un photodétecteur commandé par fenêtre temporelle (625).

3. Dispositif selon la revendication 1, dans lequel les moyens (625) pour détecter sont structurés pour détecter des différences entre les propriétés spectrales du rayonnement des moyens (600) pour éclairer et les propriétés spectrales du rayonnement reçu de l'objet de diffraction (690).

4. Dispositif selon la revendication 1, dans lequel l'objet de diffraction (690) comprend une image en relief de surface de diffraction.

5. Dispositif selon la revendication 1, dans lequel l'objet de diffraction (690) comprend un substrat au moins partiellement recouvert d'un motif de particules émettrices de lumière.

6. Dispositif selon la revendication 1, dans lequel l'objet de diffraction (690) comprend un hologramme superficiel en relief et une couche immédiate contenant des particules émettrices de lumière.

7. Dispositif selon la revendication 1, dans lequel les moyens (625) pour détecter sont structurés pour détecter la répartition spatiale du rayonnement diffracté et diffusé par l'objet de diffraction (690).

8. Dispositif selon la revendication 1, comprenant en outre :
a) un réseau de photodétecteurs (625) comportant une pluralité d'éléments ;
b) une optique de dispersion spectrale pour disperser un rayonnement émis ou une lumière diffractée et une lumière diffusée par l'objet de diffraction (690) ; et
c) un dispositif électronique couplé au réseau de photodétecteurs et structuré pour traiter un signal reçu du réseau de photodétecteurs pour interpréter la répartition du rayonnement sur les éléments du réseau de photodétecteurs.

9. Procédé d'extraction d'informations d'objets de diffraction (690), comprenant les étapes consistant à :
a) éclairer un objet de diffraction (690) avec un rayonnement spatialement cohérent ;
b) détecter au moins une partie du diagramme de rayonnement diffracté par l'objet (690) ;
c) comparer la partie détectée du diagramme avec un modèle de diagramme pour produire une version transformée du diagramme ;
**caractérisé par** les étapes consistant à :
d) identifier et localiser des valeurs crêtes dans la version transformée ;
e) représenter en tant que vecteur les emplacements des valeurs crêtes dans une version transformée du diagramme, le vecteur étant une liste ordonnée de valeurs ; et
f) comparer le vecteur à un ensemble de vecteurs de référence pour classer le vecteur et pour classer de ce fait le diagramme de diffraction provenant de l'objet de diffraction.

10. Procédé selon la revendication 9, comprenant en outre les étapes consistant à :
a) mémoriser un enregistrement d'informations de vérification correspondant à la répartition spatiale des propriétés d'émission ou des propriétés de diffraction et de diffusion de rayonnement de l'objet de diffraction (690) ; et
b) comparer l'enregistrement mémorisé d'informations de vérification avec les informations provenant du dispositif de diffraction (690).

11. Procédé selon la revendication 9, dans lequel les actions de détection d'au moins une partie du diagramme de rayonnement diffracté par l'objet (690) comprennent la détection et l'analyse du rayonnement reçu de l'objet de diffraction (690).

12. Procédé selon la revendication 9, dans lequel ie rayonnement spatialement cohérent comprend un rayonnement ayant une modulation temporelle prédéterminée comprenant une pluralité de fréquences de modulation.

13. Procédé selon la revendication 9, dans lequel l'action de détection d'au moins une partie du diagramme de rayonnement diffracté par l'objet (690) comprend la détection des différences entre les propriétés spectrales du rayonnement des moyens (600) pour éclairer et les propriétés spectrales du rayonnement reçu de l'objet de diffraction (690).

14. Procédé selon la revendication 9, dans lequel l'objet de diffraction (690) comprend une image en relief de surface de diffraction.

15. Procédé selon la revendication 9, dans lequel l'objet de diffraction (690) comprend un hologramme superficiel en relief et une couche immédiate au moins partiellement recouverte de particules émettrices de lumière.

16. Procédé selon la revendication 9, dans lequel l'objet de diffraction (690) comprend un hologramme superficiel en relief et une couche immédiate contenant des particules émettrices de lumière.

17. Procédé selon la revendication 9, dans lequel l'action de détection d'au moins une partie du diagramme de rayonnement diffracté par l'objet (690) comprend la détection de la répartition spatiale du rayonnement diffracté et diffusé par l'objet de diffraction (690).
